Europäisches Patentamt

European Patent Office

Office européen des brevets

(19)

(11) Numéro de publication: **0 242 281**
**B1**

(12) FASCICULE DE BREVET EUROPEEN

(45) Date de publication du fascicule du brevet:
07.06.89

(51) Int. Cl.⁴: **F04B 1/04,** F04B 21/02,
F16K 15/14

(21) Numéro de dépôt: 87400800.6

(22) Date de dépôt: 09.04.87

(54) Pompe multipistons à clapets à lame.

(30) Priorité: 15.04.86 FR 8605671

(43) Date de publication de la demande:
21.10.87 Bulletin 87/43

(45) Mention de la délivrance du brevet:
07.06.89 Bulletin 89/23

(84) Etats contractants désignés:
DE GB IT

(56) Documents cités:
EP-A- 0 165 876
FR-A- 1 001 055
FR-A- 1 157 126
FR-A- 1 537 110

(73) Titulaire: AUTOMOBILES PEUGEOT, 75, avenue de la
Grande Armée, F-75116 Paris(FR)
Titulaire: AUTOMOBILES CITROEN, 62 Boulevard
Victor-Hugo, F-92200 Neuilly-sur-Seine(FR)

(72) Inventeur: Maillochaud, Jean-Claude, 6, rue du Bois,
F-78370 Plaisir(FR)

(74) Mandataire: Boivin, Claude, 9, rue Edouard-Charton,
F-78000 Versailles(FR)

ACTORUM AG

## Description

L'invention concerne une pompe radiale multipistons du genre de celles qui servent de source de pression dans les circuits hydrauliques, par exemple dans les circuits d'assistance de freinage ou de direction des véhicules automobiles.

Les pompes radiales multipistons comportent en général un arbre moteur muni d'un excentrique ou d'une came propre à imposer un mouvement alterné à une pluralité de pistons disposés radialement, le déplacement des pistons ayant pour effet de refouler du liquide à travers des clapets vers les circuits d'utilisation.

Généralement dans les pompes radiales multipistons, chaque cylindre est équipé d'un piston, de moyens élastiques de rappel, d'un clapet d'admission et d'un clapet de refoulement.

Le document EP-A 0 165 876 décrit une pompe du type mentionné ci-dessus qui comporte une chambre haute pression vers laquelle convergent des conduits de refoulement issus des cylindres, cette chambre haute pression contenant des clapets à lame disposés en étoile sur une même pièce.

La présente invention a pour but l'élimination des vibrations de la lame et de la cavitation du liquide qui provoquent la détérioration rapide des extrémités des conduits d'échappement.

La pompe radiale selon l'invention est caractérisée en ce qu'elle comporte dans la chambre haute pression, interposée entre les clapets à lame et le corps de pompe, une contre-plaque en matériau plastique, munie de moyens pour la mettre en précontrainte, de moyens pour mettre en précontrainte les clapets, et de portées hydrostatiques propres à être mises en contrainte sur le corps de pompe.

La contre-plaque peut comporter sur son côté tourné vers le corps de pompe une face qui au repos est conique ou sphérique concave. Elle peut comporter du côté de la chambre haute pression une face périphérique plane et une face centrale plane, ces deux faces étant situées au repos dans un même plan et propres à former après contrainte de la contre-plaque une surface concave.

On a décrit ci-après, à titre d'exemple non limitatif, un mode de réalisation de la pompe selon l'invention, avec référence aux dessins annexés dans lesquels :

La Figure 1 est une coupe axiale de la pompe suivant I-I de la Figure 2;
La Figure 2 représente le corps de la pompe, suivant la flèche F de la Figure 1 le capot étant enlevé;
La Figure 3 montre en coupe la contre-plaque;
La Figure 4 est une vue latérale de gauche de la contre-plaque.

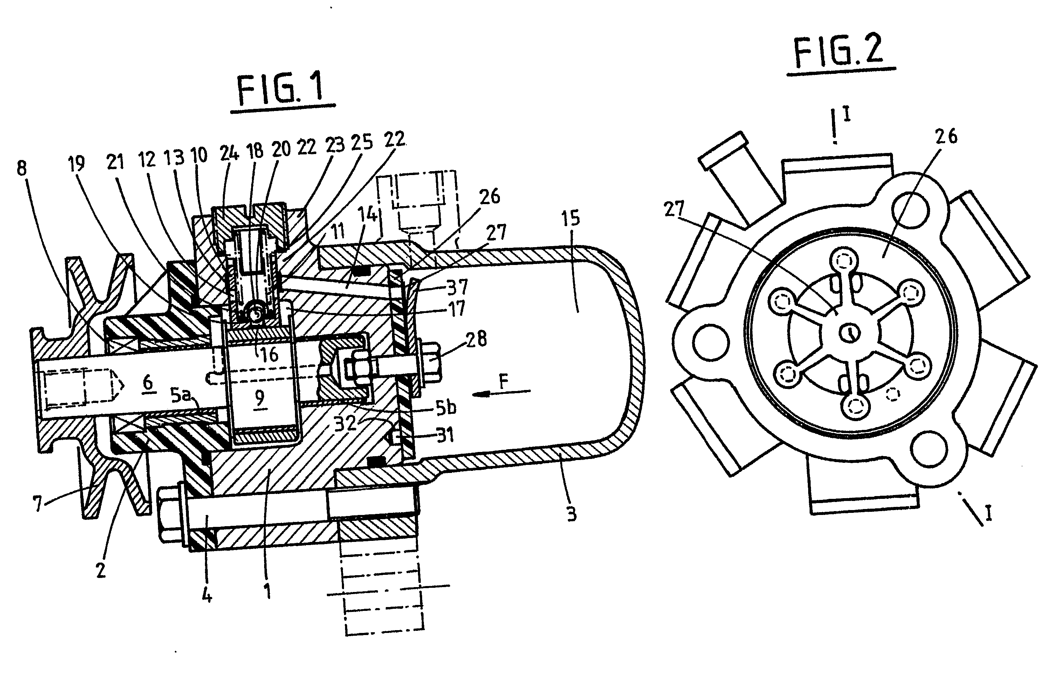

On voit à la Figure 1 une pompe à six pistons suivant l'invention. Elle se compose d'un corps 1, d'un couvercle en matière plastique 2 et d'un capot 3, reliés de manière étanche par des boulons 4.

Le carter 1 et le couvercle 2 sont munis chacun d'un palier anti-friction 5ª ou 5b̲. Les deux paliers 5ª et 5b̲ portent un arbre 6 sur lequel est calée une poulie d'entraînement 7. L'arbre 6 est muni d'un joint d'étanchéité 8 et est solidaire d'un excentrique ou d'une came 9.

Une pluralité de pistons creux 10 disposés périphériquement sont maintenus en appui sur l'excentrique 9 par des ressorts 11.

Chaque piston 10 est muni d'une ou plusieurs lumières latérales 12, en communication permanente avec une gorge 13 qui constitue une chambre de refoulement et qui communique par un conduit 14 avec une chambre haute pression 15 située en bout de pompe et délimitée par le capot 3.

Chaque piston est muni également d'une lumière 16 qui communique dans sa partie inférieure dans une chambre d'aspiration 17 aménagée dans le corps 1.

La partie supérieure de la lumière 16 reçoit une bille 18 qui peut s'appliquer sur un siège 19.

Pendant la phase descendante du piston 10, la bille 18 se soulève de son siège et vient en appui sur une coupelle 20 qui est munie de lumières 21 afin de laisser passer le liquide pendant la phase d'aspiration.

Les pistons 10 sont montés coulissants dans les cylindres 22 ménagés dans des bossages du corps 1. Chaque cylindre 22 comporte une partie élargie taraudée 23 dans laquelle est vissé un bouchon 24 qui vient en appui sur un joint 25 qui assure l'étanchéité.

Le bouchon 24 sert d'appui au ressort 11.

A l'intérieur de la chambre 15 une contre-plaque 26 en matière plastique et une pièce 27 en matière élastique découpée au poinçon de façon à former six lames radiales en étoile sont fixées au corps 1 par une vis centrale 28.

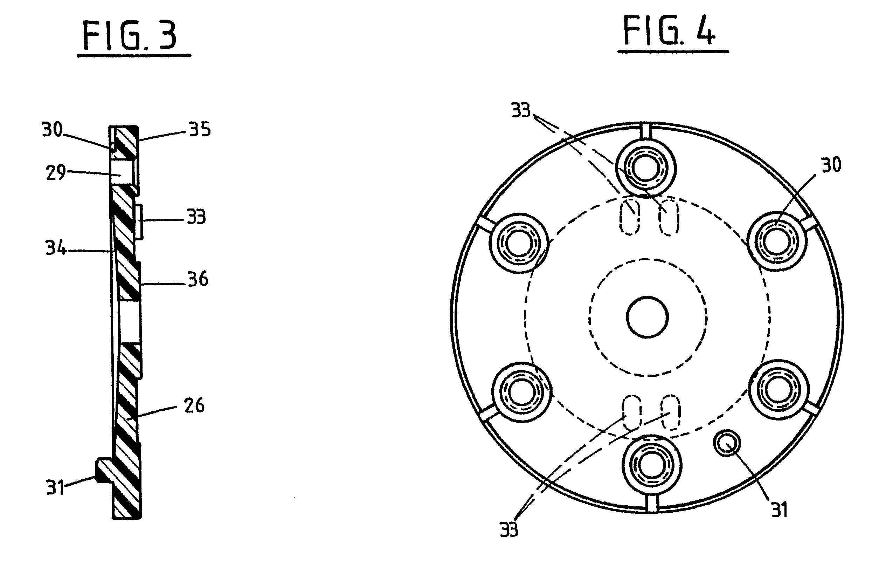

La contre-plaque 26 que l'on voit sur les Figures 3 et 4 comporte six conduits 29 et six portées hydrostatiques circulaires 30 (concentriques aux conduits 29) qui se trouvent en regard de chaque orifice de sortie des conduits 14. L'orientation est réalisée simplement au moyen d'un pion 31 solidaire de la contre-plaque 26 et qui occupe un logement 32 réalisé dans le corps 1.

La pièce 27 formée de six lames radiales en étoile, vient en appui sur la contre-plaque 26 de façon que chacune de ses lames se trouve en regard de l'orifice de sortie de l'un des conduits 29. L'orientation est réalisée simplement au moyen de deux ou de quatre pions 33 solidaires de la contre-plaque 26 et sont engagés dans des évidements de la pièce 27. Les déformations des lames du côté de la chambre 15 sont limitées par une pièce 37 servant de renfort de clapet. La contre-plaque 26, à l'état libre, possède de son côté en appui sur le corps 1 une face conique ou sphérique 34 et de son côté en appui sur la pièce 27 une face plane périphérique 35 et une face plane centrale 36 dans un même plan au repos.

Lors du serrage de l'ensemble contre-plaque 26 et pièce 27 sur le corps 1 par la vis 28, l'élasticité de la contre-plaque 26 permet la suppression du cône 34 et le plaquage de la contre-plaque sur le corps 1 réalisant ainsi une précontrainte sur les portées hydrostatiques 30 et assurant leur étanchéité. Dans le même temps la face 36 s'est déplacée par rapport à la face 35 permettant ainsi une précontrainte des six lames formant clapet en appui sur la face 35 et assurant ainsi une bonne étanchéité.

Le liquide sous pression en provenance des cylindres 22 passe par les conduits 14 et pénètre dans la chambre 15.

## Revendications

1. Pompe radiale multicylindrique comportant un corps de pompe (1), un arbre tournant (6) muni d'au moins un excentrique ou une came (9) actionnant une pluralité de pistons (10) coulissant dans des cylindres (22) disposés périphériquement selon une ou plusieurs rangées, et une chambre (15) haute pression vers laquelle convergent des conduits (14) de refoulement issus des cylindres, cette chambre haute pression contenant des clapets à lame disposés en étoile sur une même pièce (27), caractérisée en ce qu'elle comporte dans la chambre haute pression (15), interposée entre les clapets à lame (27) et le corps de pompe (1), une contre-plaque (26) en matériau plastique, munie de moyens pour la mettre en précontrainte, de moyens pour mettre en précontrainte les clapets, et de portées hydrostatiques (30) propres à être mises en contrainte sur le corps de pompe (1).

2. Pompe radiale selon la revendication 1, caractérisée en ce que la contre-plaque comporte au repos une face conique ou sphérique (34) concave du côté du corps de pompe (1).

3. Pompe radiale selon la revendication 2, caractérisée en ce que la contre-plaque comporte du côté de la chambre haute pression (15) une face plane périphérique (35) et une face plane centrale (36) situées au repos dans un même plan et propres à former après contrainte de la contre-plaque une surface concave.

4. Pompe radiale selon l'une des revendications 1 à 3, caractérisé en ce que la contre-plaque (26) est munie de moyens (31) de centrage et de calage sur le corps de pompe.

5. Pompe radiale selon l'une des revendications 1 à 4, caractérisée en ce que la contre-plaque (26) est munie de moyens (33) de centrage et de calage des clapets à lame.

## Claims

1. Multicylinder radial pump comprising a pump body (1), a rotary shaft (6) having at least one eccentric or cam (9) actuating a plurality of pistons (10) sliding in cylinders (22) disposed peripherally in one or more rows and a high pressure chamber (15) towards which converge discharge ducts (14) from the cylinders, this high pressure chamber containing blade valves disposed in the form of a star on the same piece (27), characterized in that it comprises in the high pressure chamber (15), inserted between the blade valves (27) and the pump body (1), a plastic material back-plate (26) having means for pre-stressing it, means for pre-stressing the valves and hydrostatic bearing surfaces (30) able to be pre-stressed on the pump body (1).

2. Radial pump according to claim 1, characterized in that the back-plate comprises at rest a conical or concave shperical face (34) on the pump body (1) side.

3. Radial pump according to claim 2, characterized in that the back-plate comprises, on the high pressure chamber (15) side, a flat peripheral face (35) and a flat central face (36) situated at rest both in the same plane and capable of forming a concave surface after stressing of the back-plate.

4. Radial pump according to one of claims 1 to 3, characterized in that the back-plate (26) is provided with means for centring and fixing it on the pump body.

5. Radial pump according to one of claims 1 to 4, characterized in that the back-plate (26) is provided with means (33) for centring and fixing the blade valves.

## Patentansprüche

1. Mehrzylinder-Radialpumpe mit einem Pumpenkörper (1), einer mit mindestens einem Exzenter oder einer Kurvenscheibe (9) versehenen drehenden Welle (6), die mehrere Kolben (10) antreibt, welche in Zylindern (22) gleitend geführt sind, die in einer oder mehreren Reihen peripher angeordnet sind, und einer Hochdruckkammer (15), in welcher von den Zylindern ausgehende Druckleitungen (14) zusammenlaufen, wobei diese Hochdruckkammer Blattventile enthält, die sternförmig an einem gemeinsamen Bauteil (27) angeordnet sind, dadurch gekennzeichnet, daß in der Hochdruckkammer (15) zwischen die Blattventile (27) und den Pumpenkörper (1) eine Gegenplatte (26) aus Kunststoff eingeschaltet ist, die mit Mitteln versehen ist, um sie unter Vorspannung zu setzen, sowie mit Mitteln um die Ventile unter Vorspannung zu setzen und mit hydrostatischen Dichtflächen (30), die auf dem Pumpenkörper (1) unter Spannung setzbar sind.

2. Radialpumpe nach Anspruch 1, dadurch gekennzeichnet, daß die Gegenplatte im Ruhezustand an der Seite des Pumpenkörpers (1) eine konische oder sphärische konkave Oberfläche (34) aufweist.

3. Radialpumpe nach Anspruch 2, dadurch gekennzeichnet, daß die Gegenplatte an der Seite der Hochdruckkammer (15) eine peripher verlaufende ebene Fläche (35) und eine zentrale ebene Fläche (36) aufweist, die im Ruhezustand in der gleichen Ebene liegen und im unter Spannung gesetzten Zustand der Gegenplatte eine konkave Oberfläche bilden.

4. Radialpumpe nach einem der Ansprüche 1 bis 3, dadurch gekennzeichnet, daß die Gegenplatte (26) mit Mitteln (31) zur Zentrierung und Festlegung auf dem Pumpenkörper versehen ist.

5. Radialpumpe nach einem der Ansprüche 1 bis 4, dadurch gekennzeichnet, daß die Gegenplatte (26) mit Mitteln (33) zur Zentrierung und Festlegung der Blattventile versehen ist.

# FIG.1

19 21 12 13 10 24 18 20 22 23 25 22

8

26

27

11 14

37

17

15

28

F

6

5a

16

9

5b

3

7

2

32

31

4

1

# FIG.2

I

26

27

I

EP 0 242 281 B1

FIG. 3

FIG. 4

EP 0 242 281 B1